# FASCICULE DE BREVET EUROPEEN

(11) **EP 2 229 270 B1**
(45) Date de publication et mention de la délivrance du brevet: **23.03.2016**
(21) Numéro de dépôt: 09703349.2
(22) Date de dépôt: 05.01.2009
(51) Int. Cl.: B29C 49/48, B65D 1/02, B29C 49/54

(54) **FOND DE MOULE ET DISPOSITIF DE MOULAGE DE RECIPIENTS THERMOPLASTIQUES**
WERKZEUG-BODEN UND VORRICHTUNG ZUR HERSTELLUNG EINES BEHÄLTERS
MOULD BOTTOM ND DEVICE FOR PRODUCING THERMOPLASTIC CONTAINER

(30) Priorité: 08.01.2008 FR 0850073
(43) Date de publication de la demande: 22.09.2010
(73) Titulaire: Sidel Participations, 76930 Octeville Sur Mer (FR)
(72) Inventeur: BOUKOBZA, Michel, F-76930 Octeville-sur-mer (FR)
(74) Mandataire: Siloret, Patrick
(86) Numéro de dépôt international: PCT/FR2009/050004
(87) Numéro de publication internationale: WO 2009/092930

(56) Documents cités:
- WO-A-2007/016959
- FR-A- 2 897 292
- US-B1- 6 276 546

## Description

La présente invention concerne, d'une manière générale, le domaine de la fabrication, par soufflage ou étirage-soufflage, de récipients, notamment de bouteilles, en matière thermoplastique telle que du PET (polyéthylène téréphtalate).

La partie des récipients qui est la plus délicate à fabriquer est le fond. C'est en effet le fond de récipient qui supporte le poids de la colonne de liquide contenu dans le récipient et, dans le cas où il présente une résistance mécanique insuffisante, il perd sa forme et le récipient ne peut plus reposer de façon stable sur un support.

Le fond constitue donc la partie du récipient dont le formage correct par l'opération de soufflage ou d'étirage-soufflage est la plus difficile à réaliser, du fait même que l'épaisseur sensiblement plus importante de matière conduit à un étirage plus lent et à une prise de forme moins facile.

L'affaissement de la partie centrale du fond de récipient modifie la position et/ou l'inclinaison des parois. Le récipient ne repose plus de façon stable sur un support plan.

Or, pour améliorer sa résistance mécanique, le fond présente habituellement une forme complexe, voire très complexe, avec de nombreux reliefs en creux et en saillie dont la conformation correcte conduit à la résistance mécanique souhaitée.

Or, en quelque endroit que ce soit du fond, il faut que la résistance mécanique soit suffisante pour éviter l'affaissement du fond sous l'action du poids du liquide et de la pression interne (ce type de récipient étant souvent destiné à contenir des liquides carbonatés).

En outre, la forme complexe des fonds exige une grande maîtrise des conditions de soufflage, et notamment de la pression de soufflage, pour parvenir à la formation de fonds de récipient corrects.

La déformation correcte de la matière dans la région du fond était jusqu'à présent obtenue en mettant en oeuvre un soufflage sous pression élevée (typiquement de l'ordre de 40*10⁵ Pa) qui permettait de conjuguer cette déformation correcte de la matière avec la pratique de cadences de production élevées de plusieurs milliers de récipients par heure.

Cependant, la production d'un fluide de soufflage (en général de l'air) sous une pression aussi élevée est très coûteuse en matériel et en énergie électrique consommée et les fabricants souhaitent faire des économies sur ce poste. De plus, un accroissement des cadences de production ne peut plus être envisagé dans les conditions de fabrication actuelles.

On soulignera aussi, le parcours angulaire très important que doit subir la matière au cours de la déformation conduisant de la forme hémisphérique du fond de la préforme initiale vers la paroi à orientation inversée (s'appuyant sur une surface approximativement conique) ; selon les emplacements, la matière peut subir un parcours angulaire pouvant aller jusqu'à 90°, voire plus.

Ceci, allié à l'épaisseur notable de la matière dans cette zone, peut conduire à un plaquage insuffisant de la matière sur la paroi de la cavité de moulage et à un mauvais refroidissement de la matière contre le moule ; il peut en résulter une moindre qualité du fond ou de certaines parties du fond de récipient. En outre, ce parcours angulaire important de la matière nécessite un temps certain.

Or, les fabricants de récipients en matière thermoplastique recherchent de façon permanente à améliorer les conditions économiques de production, en tentant de produire des récipients nécessitant une moindre quantité de matière thermoplastique, sous une pression de soufflage si possible sensiblement moindre (susceptible d'entraîner un plaquage insuffisant de la matière contre le moule), et surtout avec des cadences de production toujours accrues (nécessitant que lors du moulage la matière se déroule plus rapidement).

Les parties les plus délicates à souffler sont les parties du fond de moule qui présentent la distance la plus grande par rapport à l'axe central du fond de moule.

Cette difficulté est d'autant plus accentuée s'il existe des zones dans lesquelles est susceptible de s'accumuler la matière soufflée constitutive de la préforme en empêchant que cette matière s'écoule librement sur tout le fond de moule.

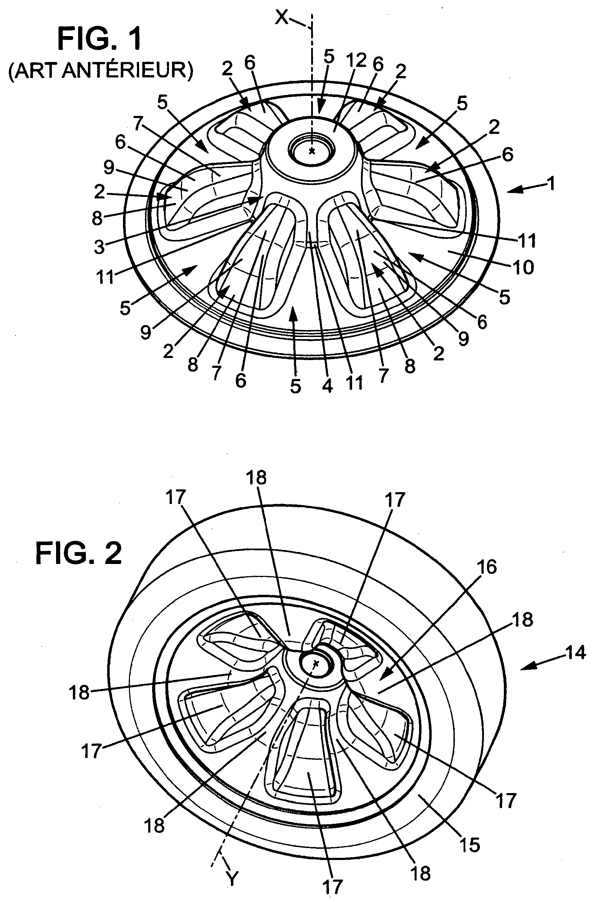

La figure 1 représente une vue schématique d'un tel fond de moule selon l'art antérieur.

Le fond 1 de moule tel qu'illustré sur la figure 1 est destiné à un moule de fabrication, par soufflage ou étirage-soufflage, de récipients, notamment de bouteilles, à partir de préformes en matière thermoplastique, telle que du PET, les récipients ayant un corps et un fond de récipient comprenant une assise périphérique, conformée en couronne, intérieurement raccordée à une zone centrale formant voûte constituée d'une pluralité d'empreintes rayonnantes alternées avec une pluralité de saillies rayonnantes, qui sont distribuées angulairement de façon équidistante autour dudit axe central du fond de récipient. Le fond 1 de moule comprend, pour le moulage de ladite zone centrale du susdit fond des récipients,
- plusieurs branches 2 saillantes rayonnantes distribuées angulairement de façon équidistante, et s'étendant approximativement radialement à l'axe X du fond 1 de moule ;
- un tronc 3 central présentant une paroi 4 latérale sur laquelle sont raccordées les branches 2 ;
- des intervalles 5 formant des tronçons de secteurs angulaires séparant régulièrement lesdites branches 2 les unes des autres.

Le fond 1 de moule est plus particulièrement destiné à permettre le moulage de récipients dont le remplissage est réalisé à chaud, c'est-à-dire avec un liquide chauffé. De manière courante, ces récipients sont dits « HR » (Heat Résistant).

Toutefois, selon l'art antérieur, chaque branche 2 saillante rayonnante présente une partie 6 supérieure en forme de plateau définissant deux sous-parties 7, 8 sensiblement rectilignes raccordées l'une à l'autre par une zone 9 de raccordement concave, la première sous-partie 7 étant sensiblement rectiligne et raccordée sur la paroi 4 latérale du tronc 3 central, tandis que la deuxième sous-partie est sensiblement inclinée par rapport à l'axe X.

De plus, il est formé une démarcation 11 anguleuse dans chaque intervalle 5 entre la paroi 4 latérale du tronc 3 et le support 10 de base.

Ainsi, à partir du fond 1 de moule de la figure 1, la matière amorphe chaude issue du fond de la préforme qui est en regard de l'extrémité 12 supérieure du tronc 3 est susceptible de s'accumuler sur la première sous-partie 7 de la branche 2 saillante et ne se diffuse et s'écoule que partiellement pour alimenter en matière chaude la périphérie du fond de moule et ainsi permettre la formation de l'assise du récipient. De plus, la démarcation 11 anguleuse de l'intervalle 5 est difficilement atteignable par la matière soufflée chaude.

Un autre fond de moule, conduisant aux mêmes inconvénients que ceux qui viennent d'être exposés, est décrit par exemple dans le document WO 2007/16959.

Les documents FR 2 897 292 et US 6 276 546 montrent des fonds de récipient que l'on peut obtenir avec des moules tels que ceux présentés ci-dessous.

Aucun des documents ne prévoit toutefois de solution technique pour pallier le problème de répartition d'une matière amorphe chaude dans un moule.

Il serait donc particulièrement intéressant de réaliser un fond de moule permettant de faciliter la diffusion de la matière amorphe chaude issue du fond de la préforme de manière à alimenter la périphérie du fond de moule et permettre la formation d'une assise de récipient plus épaisse et plus solide. Il serait également particulièrement intéressant d'obtenir un fond de moule facilitant le placage de la matière chaude en tout point du fond de moule, y compris au niveau des intervalles entre les branches saillantes.

Afin de résoudre les problèmes liés à l'art antérieur, la présente invention porte, selon un premier de ses aspects, sur un fond de moule pour un moule de fabrication, par soufflage ou étirage-soufflage, de récipients, notamment de bouteilles, à partir de préformes en matière thermoplastique, telle que du PET, les récipients ayant un corps et un fond de récipient comprenant une assise périphérique, conformée en couronne, intérieurement raccordée à une zone centrale formant voûte constituée d'une pluralité d'empreintes rayonnantes alternées avec une pluralité de saillies rayonnantes, qui sont distribuées angulairement de façon équidistante autour d'un axe central du fond de récipient, le fond de moule comprenant, pour le moulage de la zone centrale du fond de récipient, plusieurs branches saillantes rayonnantes distribuées angulairement de façon équidistante, et s'étendant approximativement radialement à l'axe du fond de moule ; un tronc central présentant une paroi latérale sur laquelle sont raccordées les branches ; des intervalles formant des tronçons de secteurs angulaires séparant régulièrement les branches les unes des autres, le fond de moule étant caractérisé en ce que chaque branche saillante rayonnante possède une partie supérieure en forme de plateau incliné s'abaissant du centre vers la périphérie avec au moins deux points d'inflexion de la courbure, ce grâce à quoi, lors du soufflage ou de l'étirage-soufflage, la matière soufflée issue du fond de la préforme soufflée peut s'écouler plus facilement sur la partie supérieure de la branche, ce qui permet d'améliorer la diffusion et la descente, par écoulement, de la matière amorphe issue du fond de la préforme soufflée.

Afin de permettre une diffusion et une descente optimums de la matière soufflée issue de la préforme, la partie supérieure comprend une première portion convexe suivie d'une portion concave puis d'une seconde portion convexe.

Afin de faciliter également la descente de la matière soufflée dans les intervalles entre les branches, les branches et le tronc sont formés sur un même support de base, les intervalles s'étendant chacun en partie sur la paroi latérale du tronc et en partie sur le support de base, une zone de transition concave étant prévue entre la paroi latérale du tronc et le support de base.

Afin d'augmenter la rigidité interne du fond de récipient soufflé et d'éviter une déformation de la surface plane et lisse entre deux branches immédiatement adjacentes, au moins un intervalle présente une barrette à crête convexe située angulairement à équidistance entre deux branches saillantes immédiatement voisines.

Selon un mode de réalisation avantageux, la barrette s'étend en partie sur la paroi latérale du tronc et en partie sur le support de base.

Avantageusement, l'inclinaison de la partie de l'intervalle formée sur le support de base est comprise entre 0 et 30°, et préférentiellement entre 10 et 15°.

De manière avantageuse, le secteur angulaire défini par chaque branche saillante est compris entre 10 et 55°, et préférentiellement entre 20 et 25°.

Toujours de manière avantageuse, la distance axiale entre la surface supérieure du tronc central et la branche saillante est comprise entre 0 et 10 mm, préférentiellement entre 3 et 4 mm.

Selon un second de ses aspects, la présente invention porte sur un dispositif de moulage pour la fabrication, par soufflage ou étirage-soufflage, de récipients, notamment de bouteilles, en matière thermoplastique telle que du PET, les récipients ayant un corps et un fond comprenant une assise périphérique, conformée en couronne, intérieurement raccordée à une zone centrale formant voûte constituée d'une pluralité d'empreintes rayonnantes alternées avec une pluralité de saillies rayonnantes, qui sont distribuées angulairement de façon équidistante autour de l'axe central du récipient, le dispositif de moulage comporte au moins un moule constitué en au moins trois parties dont un fond de moule comprenant, pour le moulage de ladite zone centrale du fond des récipients plusieurs branches saillantes rayonnantes distribuées angulairement de façon équidistante, et s'étendant approximativement radialement à l'axe du fond de moule ; un tronc central présentant une paroi latérale sur laquelle sont raccordées lesdites branches ; des intervalles formant des tronçons de secteurs angulaires séparant régulièrement lesdites branches les unes des autres ; le dispositif de moulage étant caractérisé en ce que le fond est agencé de la manière telle que précédemment décrite.

La présente invention est maintenant décrite à l'aide d'un exemple uniquement illustratif et nullement limitatif de la portée de l'invention, et à partir des illustrations suivantes, dans lesquelles :
- la figure 1 représente une vue en perspective supérieure d'un fond de moule selon l'art antérieur ;
- la figure 2 représente une vue en perspective de trois-quarts d'un fond de récipient obtenu à partir d'un fond de moule selon l'invention ;
- la figure 3 représente une vue en perspective de trois-quarts d'un fond de moule selon l'invention ;
- la figure 4 représente une vue en coupe d'une branche saillante rayonnante du fond de moule ;
- la figure 5 représente une vue partielle en coupe axiale d'un fond de moule selon l'invention, et
- la figure 6 représente une vue en perspective supérieure d'une forme de réalisation d'un fond de moule selon l'invention.

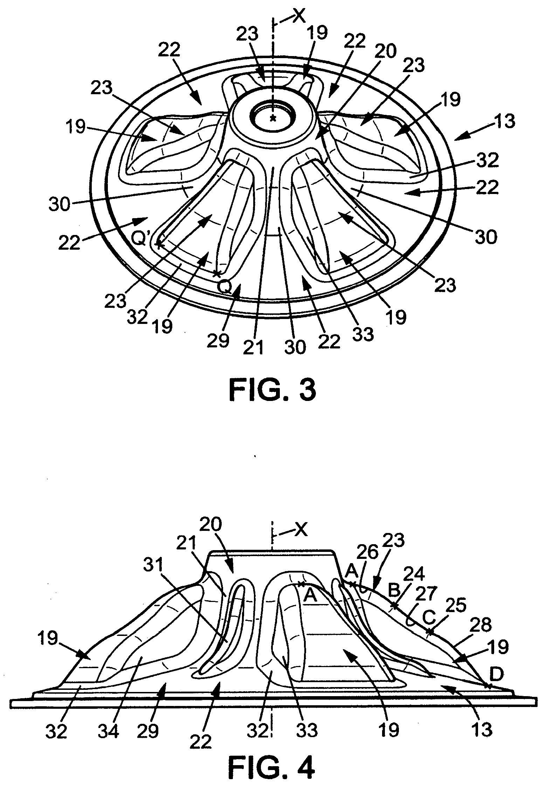

Le fond 13 de moule selon l'invention, tel qu'illustré sur les figures 3 à 6, est plus particulièrement destiné à un moule de fabrication, par soufflage ou étirage-soufflage, de récipients, notamment de bouteilles, à partir de préformes en matière thermoplastique, telle que du PET, les récipients ayant un corps et un fond 14 de récipient, tel que représenté selon une vue en perspective de trois-quarts sur la figure 2, comprenant une assise 15 périphérique, conformée en couronne, intérieurement raccordée à une zone 16 centrale formant voûte constituée d'une pluralité d'empreintes 17 rayonnantes alternées avec une pluralité de saillies 18 rayonnantes, qui sont distribuées angulairement de façon équidistante autour de l'axe Y central du fond 14 de récipient.

Le fond 13 de moule comprend, pour le moulage de la zone 16 centrale du fond 14 de récipient,
- plusieurs branches 19 saillantes rayonnantes distribuées angulairement de façon équidistante, et s'étendant approximativement radialement à l'axe X du fond 13 de moule ;
- un tronc 20 central présentant une paroi 21 latérale sur laquelle sont raccordées lesdites branches 19 ;
- des intervalles 22 formant des tronçons de secteurs angulaires séparant régulièrement les branches 19 les unes des autres.

Selon l'invention, chaque branche 19 saillante rayonnante possède une partie 23 supérieure (c'est-à-dire la zone ou surface la plus saillante de chaque branche 19) en forme de plateau incliné s'abaissant du centre vers la périphérie (c'est-à-dire selon la direction radiale allant de l'axe X central du fond 13 de moule vers l'extérieur) avec au moins deux points 24, 25 d'inflexion de la courbure (voir la figure 4 qui représente une vue en coupe d'une branche 19 saillante), ce grâce à quoi, lors du soufflage ou de l'étirage-soufflage, la matière soufflée issue du fond de la préforme soufflée peut s'écouler plus facilement sur la partie 23 supérieure de la branche 19 saillante rayonnante, ce qui permet d'améliorer la diffusion et la descente par écoulement de la matière amorphe issue du fond de la préforme. Il est entendu dans la description par « point d'inflexion de la courbure » un point où la courbure devient concave, alors qu'elle était convexe, et inversement, c'est-à-dire un point où la courbure devient convexe, alors qu'elle était concave.

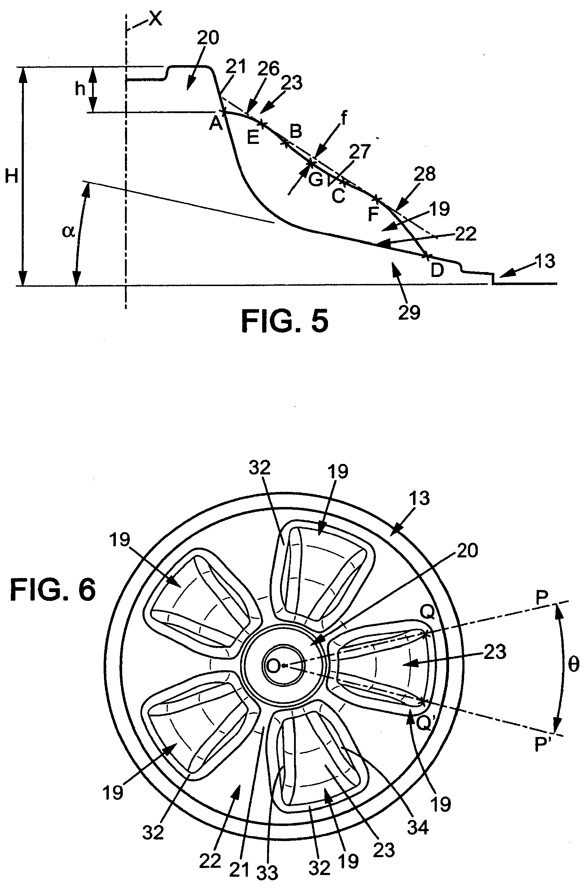

Plus précisément, selon le mode de réalisation préférentiel de l'invention, la partie 23 supérieure de chaque branche 19 comprend une première portion 26 convexe suivie d'une portion 27 concave puis d'une seconde portion 28 convexe (voir les figures 4 et 5). De manière plus précise, et comme cela apparaît clairement sur la figure 4, chaque branche 19 saillante présente une première portion 26 convexe correspondant à la section de coupe allant du point A au point B, le point B correspondant au premier point 24 d'inflexion de la courbure de la partie 23 supérieure de la branche 19 saillante. La portion 27 concave est délimitée, selon une section en coupe, entre le point B et le point C, le point C correspondant à un deuxième point 25 d'inflexion de la courbure de la partie 23 supérieure de la branche 19 saillante. La deuxième portion 28 convexe est alors délimitée, selon une vue en coupe, entre le point C et un point D correspondant au point où la branche 19 saillante rejoint le support 29 de base.

Les branches 19 et le tronc 20 sont formés sur un même support 29 de base. Il est à noter que, selon le mode de réalisation illustré de l'invention, chaque partie 23 supérieure des branches 19 ne présente que deux points d'inflexion de la courbure avec une portion 27 concave entourée de part et d'autre par deux portions 26, 28 convexes. Il est néanmoins possible de prévoir plus de deux points d'inflexion de la courbure, de sorte à ainsi faciliter et améliorer l'écoulement de la matière amorphe éclatée du fond de la préforme sur la partie 23 supérieure des branches 19 saillantes.

Par ailleurs, les intervalles 22 formant des tronçons de secteur angulaire s'étendent chacun en partie sur la paroi 21 latérale du tronc 20 et en partie sur le support 29 de base, une zone 30 de transition (ou de raccordement) concave étant prévue entre la paroi 21 latérale du tronc 20 et le support 29 de base (voir figure 3), de sorte à ainsi faciliter l'écoulement de la matière thermoplastique soufflée dans cet intervalle 22, et de ne pas présenter de démarcation anguleuse entre la paroi 21 latérale du tronc 20 et le support 29 de base, qui serait susceptible de bloquer l'écoulement de la matière et qui est également difficile à plaquer parfaitement avec la matière thermoplastique soufflée.

Afin d'améliorer la rigidité de la voûte formée par le fond de moule selon l'invention et d'éviter une déformation de la surface plane et lisse entre deux branches 19 immédiatement voisines et comme cela est illustré sur la figure 4, au moins un intervalle 22 présente une barrette 31 à crête convexe située angulairement à équidistance entre deux branches 19 saillantes immédiatement voisines, la barrette 31 s'étendant en partie sur la paroi 21 latérale du tronc 20 et en partie sur le support 29 de base. De manière préférentielle, les barrettes 31 à crête convexe sont prévues pour un fond de moule à quatre branches 19 saillantes et/ou permettant le soufflage/moulage de récipients à grande capacité (c'est-à-dire une capacité supérieure ou égale à 0.5L).

A titre d'exemple, et comme cela apparaît plus clairement de la figure 5, l'angle a d'inclinaison de la partie de l'intervalle 22 formée sur le support 29 de base, à savoir l'angle d'inclinaison s'étendant entre un plan transversal à l'axe X et un plan défini par la partie de l'intervalle 22 formée sur le support 29 de base, est compris entre 0 et 30°, préférentiellement entre 10 et 15°.

Pour un fond 13 de moule à cinq branches 19 tel qu'illustré sur la figure 6, le secteur θ angulaire défini par chaque branche 19 saillante est compris entre 10 et 55°, et préférentiellement entre 20 et 25°. Il est entendu par secteur θ angulaire d'une branche 19 saillante l'angle de centre O (O étant le point central du fond 13 de moule correspondant au point de passage de l'axe X) formé dans un plan transversal à l'axe X et délimité par deux plans P et P' passant par l'axe X et les points Q, Q' extrêmes latéraux de la partie 23 supérieure de la branche 19 saillante, les points Q et Q' étant les points latéraux de la partie 23 supérieure situés sensiblement dans un même plan transversal à l'axe X avec l'écartement maximal l'un par rapport à l'autre. La distance h axiale entre la surface supérieure du tronc 20 central et la branche 19 saillante est comprise entre 0 et 10 mm, préférentiellement entre 3 et 4 mm. Autrement dit, la distance h correspond à la distance entre un plan transversal à l'axe X passant par la surface la plus supérieure du tronc 20 et un autre plan transversal à l'axe X passant par le point A, c'est-à-dire le point le plus en hauteur de la partie 23 supérieure de la branche 19 saillante. La hauteur H, telle que représentée sur la figure 5 et correspondant à la hauteur totale maximale du fond 13 de moule, est quant à elle variable en fonction des caractéristiques dimensionnelles du récipient que l'on souhaite moule.

Par ailleurs, en considérant la droite passant par les sommets E et F selon la vue en coupe axiale de la branche 19 telle qu'illustrée sur la figure 5, le point E correspondant au sommet de la première portion 26 concave et le point F correspondant au sommet de la deuxième portion 28 convexe, alors si l'on appelle f la distance la plus grande entre la droite (EF) et le sommet G de la portion 27 concave mesurée selon une droite perpendiculaire à la droite (EF), alors la distance f est comprise entre 0 et 6 mm, et préférentiellement entre 0.2 et 2 mm.

Par ailleurs, il convient de noter que le rayon de courbure de la première portion 26 convexe est compris entre 0.3 et 2 fois le rayon de courbure de la deuxième portion 28 convexe, et préférentiellement compris entre 0.5 et 1 fois ce rayon de courbure de la deuxième portion 28 convexe.

De plus, il convient de noter pour chaque branche 19 saillante l'existence d'une zone 32 de raccordement entre sa partie 23 supérieure, ses parties 33, 34 latérales et le reste du fond 13 de moule. Plus précisément, cette zone 32 de raccordement s'étend entre, d'un côté, la paroi 21 latérale du tronc 20 central et le support 29 de base et, d'un autre côté, les parties 33, 34 latérales et la partie 23 supérieure de la branche 19, les points A, Q et Q' étant situés au niveau de la jonction entre la partie 23 supérieure de la branche 19 et cette zone 32 de raccordement.

Il est à noter que le fond 13 de moule selon l'invention peut comporter aussi bien quatre branches 19 saillantes rayonnantes que cinq branches 19 (comme cela est représenté sur la figure 3) ou encore six branches 19 saillantes. De manière générale, le fond 13 de moule comporte un nombre de branches 19 saillantes approprié aux caractéristiques dimensionnelles (par exemple le volume) du récipient soufflé ainsi qu'à son poids. Préférentiellement, un fond 13 de moule à quatre branches 19 est plus particulièrement destiné au soufflage par moulage d'un récipient de forme carrée, chaque branche 19 du fond 13 de moule étant alors dirigée vers un coin anguleux du récipient carré soufflé.

Selon un autre de ses aspects, la présente invention porte également sur un dispositif de moulage pour la fabrication, par soufflage ou étirage-soufflage, de récipients, le dispositif de moulage comportant au moins un moule constitué en au moins trois parties dont un fond de moule agencé de la manière telle que ci-dessus décrite.

## Revendications

1. Fond (13) de moule pour un moule de fabrication, par soufflage ou étirage-soufflage, de récipients, notamment de bouteilles, à partir de préformes en matière thermoplastique, telle que du PET, lesdits récipients ayant un corps et un fond (14) de récipient comprenant une assise (15) périphérique, conformée en couronne, intérieurement raccordée à une zone (16) centrale formant voûte constituée d'une pluralité d'empreintes (17) rayonnantes alternées avec une pluralité de saillies (18) rayonnantes, qui sont distribuées angulairement de façon équidistante autour d'un axe (Y) central dudit fond (14) de récipient, ledit fond (13) de moule comprenant, pour le moulage de ladite zone (16) centrale dudit fond (14) de récipient,
- plusieurs branches (19) saillantes rayonnantes distribuées angulairement de façon équidistante, et s'étendant approximativement radialement à l'axe (X) du fond de moule ;
- un tronc (20) central présentant une paroi (21) latérale sur laquelle sont raccordées lesdites branches (19) ;
- des intervalles (22) formant des tronçons de secteurs angulaires séparant régulièrement lesdites branches (19) les unes des autres,
le fond (13) de moule étant **caractérisé en ce que** chaque branche (19) saillante rayonnante possède une partie (23) supérieure en forme de plateau incliné, présentant une courbure, s'abaissant du centre vers la périphérie avec au moins deux points (24, 25) d'inflexion de la courbure, ce grâce à quoi, lors du soufflage ou de l'étirage-soufflage, la matière soufflée issue du fond de la préforme soufflée peut s'écouler plus facilement sur la partie (23) supérieure de la branche (19), ce qui permet d'améliorer la diffusion et la descente, par écoulement, de la matière amorphe issue du fond de la préforme soufflée.

2. Fond de moule selon la revendication 1, **caractérisé en ce que** ladite partie (23) supérieure comprend une première portion (26) convexe suivie d'une portion (27) concave puis d'une seconde portion (28) convexe.

3. Fond de moule selon la revendication 2, **caractérisé en ce que** lesdites branches (19) et ledit tronc (20) sont formés sur un même support (29) de base, et **en ce que** lesdits intervalles (22) s'étendent chacun en partie sur ladite paroi (21) latérale dudit tronc (20) et en partie sur ledit support (29) de base, une zone (30) de transition concave étant prévue entre ladite paroi (21) latérale dudit tronc (20) et ledit support (29) de base.

4. Fond de moule selon l'une quelconque des revendications 1 à 3, **caractérisé en ce qu'**au moins un intervalle (22) présente une barrette (31) à crête convexe située angulairement à équidistance entre deux branches (19) saillantes immédiatement voisines.

5. Fond de moule selon les revendications 3 et 4, **caractérisé en ce que** ladite barrette (31) s'étend en partie sur ladite paroi (21) latérale dudit tronc (20) et en partie sur ledit support (29) de base.

6. Fond de moule selon l'une quelconque des revendications 3 à 5, **caractérisé en ce que** l'inclinaison (α) de la partie de l'intervalle (22) formée sur ledit support (29) de base est comprise entre 0 et 30°, et préférentiellement entre 10 et 15°.

7. Fond de moule selon l'une quelconque des revendications 1 à 6, **caractérisé en ce que** le secteur (θ) angulaire défini par chaque branche (19) saillante est compris entre 10 et 55°, et préférentiellement entre 20 et 25°.

8. Fond de moule selon l'une quelconque des revendications 1 à 7, **caractérisé en ce que** la distance (h) axiale entre la surface supérieure du tronc (20) central et ladite branche (19) saillante est comprise entre 0 et 10 mm, préférentiellement entre 3 et 4 mm.

9. Dispositif de moulage pour la fabrication, par soufflage ou étirage-soufflage, de récipients, notamment de bouteilles, en matière thermoplastique telle que du PET, lesdits récipients ayant un corps et un fond (14) comprenant une assise (15) périphérique, conformée en couronne, intérieurement raccordée à une zone (16) centrale formant voûte constituée d'une pluralité d'empreintes (17) rayonnantes alternées avec une pluralité de saillies (18) rayonnantes, qui sont distribuées angulairement de façon équidistante autour dudit axe (Y) central du récipient, ledit dispositif de moulage comporte au moins un moule constitué en au moins trois parties dont un fond (13) de moule comprenant, pour le moulage de ladite zone (16) centrale du susdit fond (14) des récipients :
- plusieurs branches (19) saillantes rayonnantes distribuées angulairement de façon équidistante, et s'étendant approximativement radialement à l'axe (X) du fond de moule ;
- un tronc (20) central présentant une paroi (21) latérale sur laquelle sont raccordées lesdites branches (19) ;
- des intervalles (22) formant des tronçons de secteurs angulaires séparant régulièrement lesdites branches (19) les unes des autres ;
le dispositif de moulage étant **caractérisé en ce que** le fond (13) est agencé selon l'une quelconque des revendications 1 à 8.

## Patentansprüche

1. Formboden (13) für eine Form für die Herstellung von Behältern, insbesondere Flaschen, durch Blasen oder Streckblasen ausgehend von Vorformlingen aus thermoplastischem Material wie etwa PET, wobei die Behälter einen Körper und einen Behälterboden (14) besitzen, der eine Umfangsbasis (15) aufweist, die die Form eines Kranzes hat, der innen mit einer Mittelzone (16) verbunden ist, die eine Wölbung bildet, die aus mehreren radialen Eindrücken (17), die mit mehreren radialen Vorsprüngen (18) abwechseln und in Winkelrichtung gleichmäßig um eine Mittelachse (Y) des Behälterbodens (14) verteilt sind, gebildet ist, wobei der Formboden (13) für die Formung der Mittelzone (16) des Behälterbodens (14) umfasst:
- mehrere radiale vorstehende Schenkel (19), die in Winkelrichtung gleichmäßig beabstandet verteilt sind und sich angenähert radial zur Achse (X) des Formbodens erstrecken;
- einen mittigen Stumpf (20), der eine Seitenwand (21) aufweist, mit der die Schenkel (19) verbunden sind;
- Zwischenräume (22), die Teilstücke von Winkelsektoren bilden, die die Schenkel (19) regelmäßig voneinander trennen,
wobei der Formboden (13) **dadurch gekennzeichnet ist, dass** jeder radiale vorstehende Schenkel (19) einen oberen Teil (23) in Form einer geneigten Platte mit einer Krümmung besitzt, die von der Mitte zum Umfang mit wenigstens zwei Wendepunkten (24, 25) der Krümmung abfällt, wodurch beim Blasen oder Streckblasen das von dem Boden des geblasenen Vorformlings ausgehende geblasene Material leichter auf dem oberen Teil (23) des Schenkels (19) fließen kann, was ermöglicht, das Verteilen und das Absetzen durch Fließen des amorphen Materials, das von dem Boden des geblasenen Vorformlings stammt, zu verbessern.

2. Formboden nach Anspruch 1, **dadurch gekennzeichnet, dass** der obere Teil (23) einen ersten konvexen Abschnitt (26) umfasst, dem ein konkaver Abschnitt (27) und dann ein zweiter konvexer Abschnitt (28) folgen.

3. Formboden nach Anspruch 2, **dadurch gekennzeichnet, dass** die Schenkel (19) und der Stumpf (20) auf demselben Basisträger (29) gebildet sind und dass sich die Zwischenräume (22) jeweils teilweise an der Seitenwand (21) des Stumpfes (20) und teilweise an dem Basisträger (29) erstrecken, wobei eine konkave Übergangszone (30) zwischen der Seitenwand (21) des Stumpfes (20) und dem Basisträger (29) vorgesehen ist.

4. Formboden nach einem der Ansprüche 1 bis 3, **dadurch gekennzeichnet, dass** wenigstens ein Zwischenraum (22) einen Steg (31) mit konvexer Spitze aufweist, der sich in Winkelrichtung in gleichem Abstand zwischen zwei unmittelbar benachbarten vorstehenden Schenkeln (19) befindet.

5. Formboden nach den Ansprüchen 3 und 4, **dadurch gekennzeichnet, dass** sich der Steg (31) teilweise an der Seitenwand (21) des Stumpfes (20) und teilweise an dem Basisträger (29) befindet.

6. Formboden nach einem der Ansprüche 3 bis 5, **dadurch gekennzeichnet, dass** die Neigung (α) des Teils des Zwischenraums (22), der an dem Basisträger (29) gebildet ist, im Bereich von 0 bis 30° und vorzugsweise von 10 bis 15° liegt.

7. Formboden nach einem der Ansprüche 1 bis 6, **dadurch gekennzeichnet, dass** der Winkelsektor (θ), der durch jeden vorstehenden Schenkel (19) definiert ist, im Bereich von 10 bis 55° und vorzugsweise von 20 bis 25° liegt.

8. Formboden nach einem der Ansprüche 1 bis 7, **dadurch gekennzeichnet, dass** der axiale Abstand (h) zwischen der oberen Fläche des mittleren Stumpfes (20) und dem vorstehenden Schenkel (19) im Bereich von 0 bis 10 mm und vorzugsweise von 3 bis 4 mm liegt.

9. Formvorrichtung für die Herstellung von Behältern, insbesondere Flaschen, durch Blasen oder Streckblasen aus thermoplastischem Material wie etwa PET, wobei die Behälter einen Körper und einen Boden (14) besitzen, der eine Umfangsbasis (15) aufweist, die die Form eines Kranzes hat, der innen mit einer Mittelzone (16) verbunden ist, die eine Wölbung bildet, die durch mehrere radiale Eindrücke (17), die mit mehreren radialen Vorsprüngen (18) abwechseln und in Winkelrichtung in gleichem Abstand um die Mittelachse (Y) des Behälters verteilt sind, gebildet ist, wobei die Formvorrichtung wenigstens eine Form umfasst, die aus wenigstens drei Teilen gebildet ist, wobei der Formboden (13) für die Formung der Mittelzone (16) des oben genannten Bodens (14) der Behälter Folgendes umfasst:
- mehrere radiale vorstehende Schenkel (19), die in Winkelrichtung in gleichem Abstand verteilt sind und sich angenähert radial zu der Achse (X) des Formbodens erstrecken;
- ein mittleres Loch (20), das eine Seitenwand (21) aufweist, mit der die Schenkel (19) verbunden sind;
- Zwischenräume (22), die Winkelsektor-Teilstücke bilden, die die Schenkel (19) regelmäßig voneinander trennen;
wobei die Formvorrichtung **dadurch gekennzeichnet ist, dass** der Boden (13) wie in einem der Ansprüche 1 bis 8 beschaffen ist.

## Claims

1. Mould bottom (13) for a mould for manufacturing, by blow-forming or drawing and blow-forming, containers, notably bottles, from preforms made of thermoplastic material, such as PET, said containers having a container body and bottom (14) comprising a peripheral seat (15), formed as a crown ring, internally coupled to an arch-forming central zone (16) consisting of a plurality of radiating imprints (17) alternated with a plurality of radiating protuberances (18), which are distributed angularly equidistantly about a central axis (Y) of said container bottom (14), said mould bottom (13) comprising, for the moulding of said central zone (16) of said container bottom (14),
- a number of radiating protruding branches (19) distributed angularly equidistantly, and extending approximately radially to the axis (X) of the mould bottom;
- a central trunk (20) having a lateral wall (21) to which said branches (19) are connected;
- intervals (22) forming sections of angular sections regularly separating said branches (19) from one another,
the mould bottom (13) being **characterized in that** each radiating protruding branch (19) has a top part (23) in the form of an inclined plateau having a curvature, lowering from the centre to the periphery with at least two points (24, 25) of inflection of the curvature, by virtue of which, during the blow-forming or the drawing and blow-forming, the blow-formed material from the bottom of the blow-formed preform can flow more easily over the top part (23) of the branch (19), which makes it possible to improve the spread and the descent, by flow, of the amorphous material from the bottom of the blow-formed preform.

2. Mould bottom according to Claim 1, **characterized in that** said top part (23) has a first convex portion (26) followed by a concave portion (27) then a second convex portion (28).

3. Mould bottom according to Claim 2, **characterized in that** said branches (19) and said trunk (20) are formed on a same base support (29), and **in that** said intervals (22) each extend partly over said lateral wall (21) of said trunk (20) and partly over said base support (29), a concave transition zone (30) being provided between said lateral wall (21) of said trunk (20) and said base support (29).

4. Mould bottom according to any one of Claims 1 to 3, **characterized in that** at least one interval (22) has a bar (31) with convex crest situated angularly equidistantly between two immediately adjacent protruding branches (19).

5. Mould bottom according to Claims 3 and 4, **characterized in that** said bar (31) extends partly over said lateral wall (21) of said trunk (20) and partly over said base support (29).

6. Mould bottom according to any one of Claims 3 to 5, **characterized in that** the inclination (α) of the part of the interval (22) formed on said base support (29) lies between 0 and 30°, and preferentially between 10 and 15°.

7. Mould bottom according to any one of Claims 1 to 6, **characterized in that** the angular segment (θ) defined by each protruding branch (19) lies between 10 and 55°, and preferentially between 20 and 25°.

8. Mould bottom according to any one of Claims 1 to 7, **characterized in that** the axial distance (h) between the top surface of the central trunk (20) and said protruding branch (19) lies between 0 and 10 mm, preferentially between 3 and 4 mm.

9. Moulding device for manufacturing, by blow-forming or drawing and blow-forming, containers, notably bottles, made of thermoplastic material such as PET, said containers having a body and a bottom (14) comprising a peripheral seat (15), formed as a crown ring, internally connected to an arch-forming central zone (16) consisting of a plurality of radiating imprints (17) alternated with a plurality of radiating protuberances (18), which are distributed angularly equidistantly about said central axis (Y) of the container, said moulding device comprises at least one mould consisting of at least three parts including a mould bottom (13) comprising, for the moulding of said central zone (16) of the abovementioned bottom (14) of the containers:
- a number of radiating protruding branches (19) distributed angularly equidistantly, and extending approximately radially to the axis (X) of the mould bottom;
- a central trunk (20) having a lateral wall (21) to which said branches (19) are connected;
- intervals (22) forming sections of angular segments regularly separating said branches (19) form one another;
the moulding device being **characterized in that** the bottom (13) is arranged according to any one of Claims 1 to 8.
